## Europäisches Patentamt
## European Patent Office
## Office européen des brevets

(19)

(11) Numéro de publication: **0 107 550**
**B1**

(12) # FASCICULE DE BREVET EUROPÉEN

(45) Date de publication du fascicule du brevet:
**13.08.86**

(51) Int. Cl.⁴: **B 62 M 9/12**

(21) Numéro de dépôt: **83401929.1**

(22) Date de dépôt: **30.09.83**

(54) Dérailleur pour cycle à dispositif de guidage de chaîne orientable.

(30) Priorité: **12.10.82 FR 8217081**

(43) Date de publication de la demande:
**02.05.84 Bulletin 84/18**

(45) Mention de la délivrance du brevet:
**13.08.86 Bulletin 86/33**

(84) Etats contractants désignés:
**BE DE GB IT LU NL**

(56) Documents cité:
**FR-A-902 980**
**FR-A-2 337 657**
**FR-E-64 341**
**US-A-3 798 988**

(73) Titulaire: **HURET ET SES FILS Société dite:, 60 Avenue Félix Faure, F-92000 Nanterre (FR)**

(72) Inventeur: **Crepin, Hervé, 23 Rue de l'Eglise, F-80133 Noyelles Sur Mer (FR)**

(74) Mandataire: **Bressand, Georges, c/o CABINET LAVOIX 2 Place d'Estienne d'Orves, F-75441 Paris Cedex 09 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1986

# Description

La présente invention concerne un dérailleur pour cycle du type comportant un support pour un dispositif de guidage de la chaine relié au support par l'intermédiaire d'un quadrilatère déformable, qui sous l'action d'un câble de traction assure le positionnement du dispositif de guidage de chaîne par rapport aux pignons de roue libre.

Dans les dérailleurs connus du type précité, tel que celui décrit dans le brevet US—A—3 798 988, le dispositif d'articulation du dispositif de guidage sur le support est constitué par un parallèlogramme déformable dont deux côtés opposés sont définis par exemple par des points d'articulation équidistants prévus sur le support et sur le dispositif de guidage de chaîne, ces points d'articulation étant réunis deux à deux par des biellettes d'égale longueur.

On conçoit que le dispositif de guidage de chaîne ainsi relié à son support au moyen d'un parallèlogramme déformable dont les points d'articulation sur le support sont fixes reste parallèle à lui-même au cours de ses déplacements de positionnement par rapport aux pignons de roue libre.

Or, pour une bicyclette pourvue d'une roue libre par exemple à six pignons et d'un double plateau, il y a des décalages angulaires importants de la chaîne entre les positions extrêmes qu'elle peut occuper sur les pignons de roue libre et sur les plateaux du pédalier en fonction du rapport sélectionné par l'utilisateur.

Etant donné que le dispositif de guidage de chaîne du dérailleur reste parallèle à lui-même, il en résulte que dans les positions extrêmes précitées de la chaîne, celle-ci fait avec le plan des galets de guidage et avec les parois de la chape du dispositif de guidage un angle tel que les galets fonctionnent dans de mauvaises conditions et qu'il y a des risques de frottement de la chaîne sur les parois de la chape du dispositif de guidage de chaîne.

L'invention vise à remédier aux inconvénients précités des dérailleurs connus et à créer un dérailleur pour cycle dont le dispositif de guidage de chaîne serait toujours pratiquement parallèle à la direction de la chaîne quel que soit le rapport de transmission sélectionné.

Elle a donc pour objet un dérailleur pour cycle comportant un support pour un dispositif de guidage de la chaîne relié au support par l'intermédiaire d'un quadrilatère déformable, qui sous l'action d'un câble de traction assure le positionnement du dispositif de guidage de chaîne par rapport aux pignons de roue libre, caractérisé en ce qu'au moins deux côtés du quadrilatère sont inégaux, de sorte que le dispositif de guidage de la chaîne reste toujours pratiquement parallèle à la chaîne.

D'autres caractéristiques et avantages de l'invention apparaitront au cours de la description qui va suivre, donnée uniquement à titre d'exemple et faite en référence aux dessins annexés, sur lesquels:

— la Fig. 1 est une vue schématique d'un ensemble de transmission pour cycle comprenant une roue libre à six pignons et un double plateau et montrant les positions angulaires extrêmes du dispositif de guidage de chaîne obtenues avec le dérailleur suivant l'invention;
— la Fig. 2 est une vue schématique de dessus du dérailleur suivant l'invention;
— la Fig. 3 est une vue analogue à celle de la Fig. 2 d'une variante du dérailleur suivant l'invention;
— la Fig. 4 est un schéma montrant une autre variante du dispositif d'articulation du dérailleur suivant l'invention.

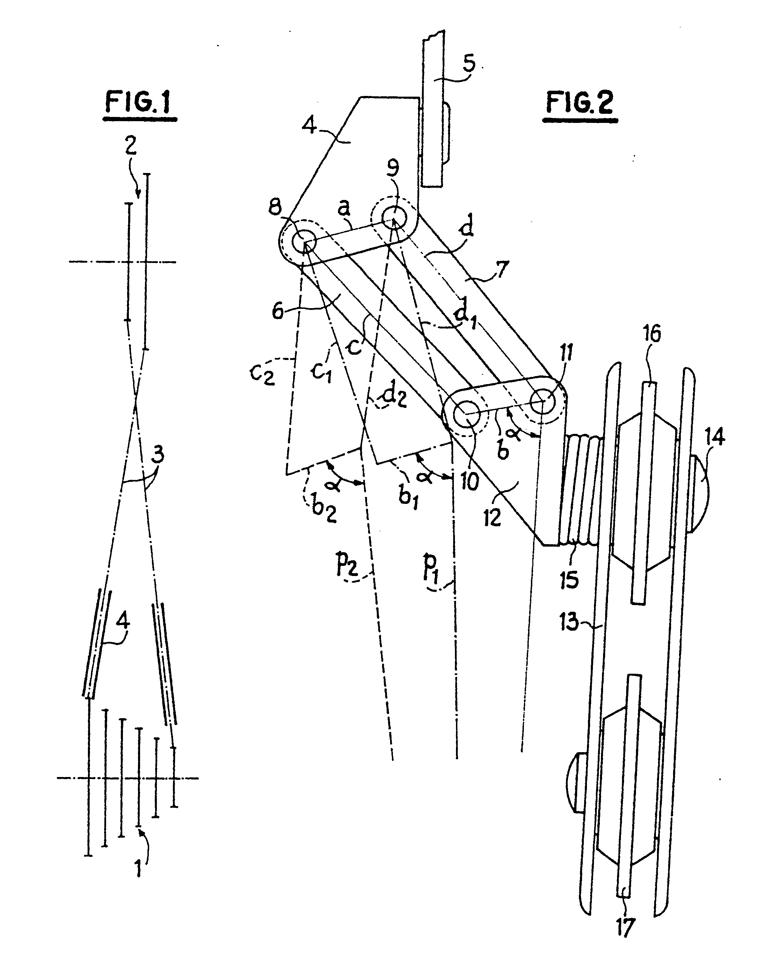

On a représenté sur la Fig. 1, un ensemble de transmission pour cycle comprenant une roue libre 1 comportant six pignons et un double plateau 2 relié par une chaîne dont les positions extrêmes compte tenu des rapports choisis sont représentées par les traits mixtes 3. On voit sur cette figure que l'écart angulaire entre les positions extrêmes de la chaîne est d'une importance telle que pour que la chaîne passe dans le dispositif de guidage de chaîne de dérailleur dans de bonnes conditions, il est nécessaire de modifier l'orientation du dispositif de guidage de chaîne représenté schématiquement en 4 sur la Fig. 1 en fonction de la direction de la chaîne déterminée par le choix du rapport de transmission.

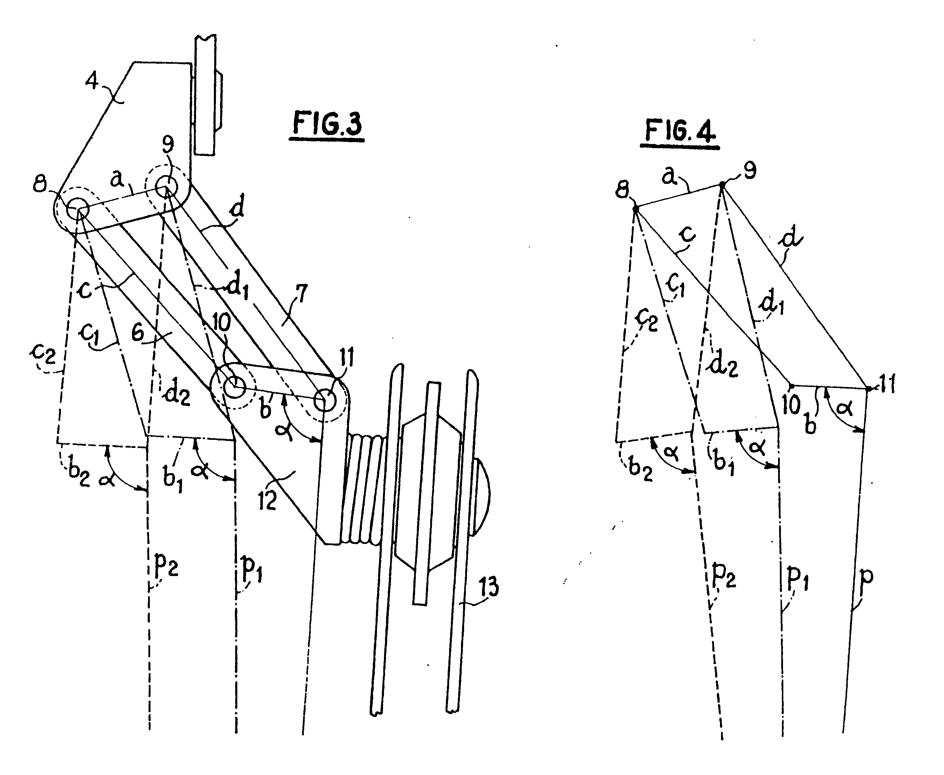

Ce problème est résolu dans le dérailleur représenté schématiquement à la Fig. 2 qui comporte un support 4 destiné à être fixé à la fourche arrière 5 du cadre d'une bicyclette. Sur le support 4 sont articulées deux biellettes 6 et 7 au moyen d'axes respectifs 8, 9 situés à une distance $a$ l'un de l'autre.

A leurs extrémités opposées, les biellettes 6 et 7 sont articulées au moyen d'axes respectifs 10 et 11 situés à une distance $b$ l'un de l'autre et montés dans une pièce 12 qui sert de support pour une chape 13 fixée à la pièce 12 au moyen d'une tige 14, un ressort de rappel 15 de la chappe 13 vers l'arrière du dérailleur entourant la tige 14 et étant intercalé entre la pièce 12 et la chape 13.

Dans la chape 13 sont montés à rotation un galet guide-chaîne 16 et un galet tendeur 17. Les biellettes 6 et 7 d'articulation de la pièce 12 sur le support 4 ont des longueurs $c$ et $d$ qui, dans le présent exemple sont égales.

Par ailleurs, la distance $b$ séparant les axes 10 et 11 montés dans la pièce 12 est inférieure à la distance $a$ séparant les axes 8 et 9 montés dans le support 4.

La direction de la chape 13 fait avec la droite joignant les axes d'articulation 10 et 11 logés dans la pièce 12, un angle $a$ constant. Les longueurs $a$, $b$, $c$ et $d$ des côtés du quadrilatère d'articulation du dispositif guide chaîne par rapport au support 4 sont choisies de manière que pour les diverses positions du quadrilatère d'articulation correspondant respectivement au positionnement du dispositif guide chaîne en regard des pignons respectifs de la roue libre, la direction de la chape 13 soit pratiquement parallèle à celle du brin inférieur de la chaîne.

Sur la Fig. 2 on a représenté en trait mixte, une position intermédiaire du quadrilatère a, b, c, d, dont les côtés $b_1$, $c_1$, $d_1$ ont tourné par rapport au côté *a* solidaire du support 4 et dont une demi-droite $p_1$ tracée à partir du sommet du quadrilatère correspondant au point d'articulation 11 et faisant un angle avec le côté $b_1$, matérialise la nouvelle direction de la chape 13 dans cette position. La position extrême opposée à la position du quadrilatère *a, b, c, d* est représentée en trait mixte par le quadrilatère a, $b_2$, $c_2$, $d_2$, prolongé pour une demi-droite $p_2$ qui matérialise la direction de la chape 13 dans cette dernière position.

On voit donc qu'au lieu de rester parallèle à elle même comme dans les dispositifs de la technique antérieure, la chape 13 du dispositif guide chaîne, lorsqu'elle subit les déplacements en vue de son positionnement en regard des divers pignons de roue libre, voit sa direction varier de manière à se trouver toujours pratiquement parallèle à la direction de la chaîne joignant le pignon de roue libre et le plateau sélectionnés. Cette variation appropriée de la direction de la chape guide chaîne est obtenue par un choix judicieux des valeurs des distances a à d qui forment le quadrilatère d'articulation de la chape 13 sur le support 4.

On peut par exemple donner aux côtés *a, b, c, d* les valeurs suivantes:

    a=15,5 mm
    b=14,5 mm
    c= d=40 mm

Sur la Fig. 3 on a représenté un dérailleur analogue à celui de la Fig. 2, à cette différence près que dans ce second cas la distance *a* joignant les axes d'articulation 8 et 9 des biellettes 6 et 7 sur le support 4 est égale à la distance *b* joignant les axes d'articulation de ces mêmes biellettes sur la pièce 12 portant la chape 13, alors que les longueurs *c* and *d* des biellettes 6 et 7 sont différentes. Dans le présent exemple, la longueur *d* de la biellette 7 est supérieure à la longueur *c* de la biellette 6.

Enfin, sur la Fig. 4, on a représenté une seconde variante de l'agencement suivant l'invention dans laquelle le quadrilatère constitué par les points d'articulation 8, 9, 10 et 11 des biellettes 6 et 7 de liaison de la pièce support de la chape au support du dérailleur est défini par des côtés *a, b, c et d*, tous de longueur différente les uns des autres. Grâce à un choix judicieux des longueurs des côtés *a, b, c et d*, on obtient un quadrilatère dont les déformations entraînent pour leur prolongement P qui matérialise la direction de la chape guide chaîne, une variation angulaire qui correspond à la variation angulaire de la direction de la chaîne pour les divers rapports de transmission sélectionnés, la chape guide chaîne 13 restant toujours pratiquement parallèle à la chaîne, de sorte que cette dernière passe sur les galets 16 et 17 dans des conditions optimales, ce qui réduit les frottements et l'usure des galets et de la chape guide-chaîne.

Il en résulte par conséquent, un fonctionnement du dérailleur considérablement amélioré.

**Revendications**

1. Dérailleur pour cycle comportant un support (4) pour un dispositif de guidage (12, 13) de la chaîne relié au support par l'intermédiaire d'un quadrilatère déformable (6, 7, 8 à 11), qui sous l'action d'un câble de traction assure le positionnement du dispositif de guidage de chaîne par rapport aux pignons de roue libre (1), caractérisé en ce qu'au moins deux côtés du quadrilatère déformable (6, 7, 8 à 11) sont inégaux, de sorte que le dispositif de guidage (12, 13) de la chaîne reste toujours pratiquement parallèle à la chaîne.

2. Dérailleur suivant la revendication 1, caractérisé en ce que le quadrilatère déformable de liaison du support (4) au dispositif de guidage de chaîne (12, 13) étant constitué comme connu en soi par deux biellettes (6, 7) articulées par leurs extrémités opposées respectivement en des points (8, 9) sur un support fixe (4) et en des points (10, 11) sur une pièce (12) formant support pour une chape (13) de guidage de chaîne, les longueurs (a, b, c, d) des côtés du quadrilatère définis respectivement par les distances (a, b) des points d'articulation (8, 9) et (10, 11) des biellettes (6, 7) sur le support (4) et sur la pièce (12) et par les longueurs (c, d) des biellettes (6, 7) sont telles qu'au moins deux côtés (a, b; c;. d; a, b, c, d) soient inégaux.

3. Dérailleur suivant la revendication 2, caractérisé en ce que les côtés (a, b) du quadrilatère définis par les distances entre les points d'articulation respectifs des bielletes (6, 7) sur le support (4) et sur la pièce (12) formant support pour la chape (13) de guidage de chaîne sont de longueurs différentes alors que les longueurs (c, d) des biellettes (6, 7) sont égales.

4. Dérailleur suivant la revendication 2, caractérisé en ce que les côtés (a, b) du quadrilatère définis par les distances entre les points d'articulation respectifs des biellettes (6, 7) sur le support (4) et sur la pièce (12) formant support pour la chape (13) de guidage de chaîne sont de longueurs égales alors que les longueurs (c, d) des biellettes (6, 7) sont différentes.

5. Dérailleur suivant la revendication 2, caractérisé en ce que les côtés (a, b, c, d) du quadrilatère d'articulation sont tous de longueurs différentes.

**Patentansprüche**

1. Gangschaltung für Fahrräder, umfassend einen Träger (4) für eine Führungseinrichtung (12, 13) der Kette, wobei die Führungseinrichtung mit dem Träger über ein verstellbares Gelenkviereck (6, 7, 8 bis 11) verbunden ist, welches unter der Wirkung eines Kabelzuges die Einstellung der Führungseinrichtung der Kette in bezug auf die Zahnritzel des Freilaufzahnrades (1) bewirkt, dadurch gekennzeichnet, daß wenigstens zwei Seiten des verstellbaren Gelenkvierecks (6, 7, 8 bis 11) ungleich lang sind derart, daß die Führungseinrichtung (12, 13) der Kette immer im wesentlichen parallel zur Kette bleibt.

2. Gangschaltung nach Anspruch 1, dadurch gekennzeichnet, daß das verstellbare Gelenkviereck für die Befestigungsverbindung des Trägers (4) mit der Führungseinrichtung (12, 13) der Kette in an sich bekannter Weise durch zwei Kurbelarme (6, 7) gebildet ist, die jeweils mit ihren entgegengesetzten Enden einerseits in Anlenkpunkten (8, 9) an einem festen Träger (4) und andererseits in Anlenkpunkten (10, 11) an einem Teil (12) angelenkt sind, welches seinerseits einen Träger für einen Führungsbügel (13) für die Kette bildet, wobei die jeweils durch als die Entfernungen (a; b) der Anlenkpunkte (8, 9, 10, 11) der Kurbelarme (6, 7) am Träger (4) und am Teil (12) sowie durch die Längen (c, d) der Kurbelarme (6, 7) bestimmten Längenabmessungen der Seiten des Gelenkvierecks derart sind, daß wenigstens zwei Seiten (a, b; c; d; a, b, c, d) ungleich sind.

3. Gangschaltung nach Anspruch 2, dadurch gekennzeichnet, daß die durch die Entfernungen zwischen den jeweiligen Anlenkpunkten der Kurbelarme (6, 7) am Träger (4) und an dem einen Träger für den Führungsbügel (13) der Kette bildenden Teil (12) bestimmten Seiten (a, b) des Gelenkvierecks unterschiedliche Längen aufweisen, während die Längen (c, d) der Kurbelarme (6, 7) gleich sind.

4. Gangschaltung nach Anspruch 2, dadurch gekennzeichnet, daß die durch die Entfernungen zwischen den jeweiligen Anlenkpunkten der Kurbelarme (6, 7) am Träger (4) und an dem einen Träger für den Führungsbügel (13) der Kette bildenden Teil (12) bestimmten Seiten (a, b) gleiche Längen aufweisen, während die Längen (c, d) der Kurbelarme (6, 7) ungleich sind.

5. Gangschaltung nach Anspruch 2, dadurch gekennzeichnet, daß die Seiten (a, b, c, d) des Gelenkvierecks alle unterschiedliche Längen haben.

**Claims**

1. A derailleur for a cycle comprising a support (4) for a chain guiding device (12, 13) which is connected to the support by a deformable quadrilateral structure (6, 7, 8 to 11) which, under the action of a pulling cable, ensures the positioning of the chain guiding device relative to the freewheel sprockets (1), characterised in that at least two sides of the deformable quadrilateral structure (6, 7, 8 to 11) are unequal so that the chain guiding device (12, 13) always remains substantially parallel to the chain.

2. A derailleur according to claim 1, characterised in that the deformable quadrilateral structure connecting the support (4) to the chain guiding device (12, 13) is constituted in the known manner by two links (6, 7) articulated by their opposite ends respectively at points (8, 9) on a fixed support (4) and at points (10, 11) on a member (12) constituting a support for a chain guiding fork element (13), the lengths (a, b, c, d) of the sides of the quadrilateral structure respectively defined by the distances (a, b) between the articulation points (8, 9) and (10, 11) of the links (6, 7) on the support (4) and on the member (12), and by the lengths (c, d) of the links (6, 7) are such that at least two sides (a, b; c; d; a, b, c, d) are unequal.

3. A derailleur according to claim 2, characterised in that the sides (a, b) of the quadrilateral structure defined by the distances between the respective articulation points of the links (6, 7) on the support (4) and on the member (12) forming a support for the fork element (13) guiding the chain are different lengths while the lengths (c, d) of the links (6, 7) are equal.

4. A derailleur according to claim 2, characterised in that the sides (a, b) of the quadrilateral structure defined by the distances between the respective articulation points of the links (6, 7) on the support (4) and on the member (12) forming a support for the chain guiding fork element (13) are of equal lengths while the lengths (c, d) of the links (6, 7) are different.

5. A derailleur according to claim 2, characterised in that the sides (a, b, c, d) of the quadrilateral articulation structure are all of different lengths.

0 107 550

FIG.1

FIG.2

1

FIG.4

FIG.3